# EUROPEAN PATENT APPLICATION

(11) **EP 1 640 706 A1**
(43) Date of publication of application: **29.03.2006**
(21) Application number: 04292275.7
(22) Date of filing: 22.09.2004
(51) Int. Cl.: G01N 21/21, G01N 21/55

(54) **Wavelength and incidence angle resolved ellipsometer or reflectometer**

(71) Applicant: ELDIM SA, 14200 Herouville Saint-Clair (FR)
(72) Inventor: Leroux, Thierry, 14000 Caen (FR); Boher, Pierre, 14114 Ver Sur Mer (FR); Luet, Mathieu, 14610 Cairon (FR)
(74) Representative: Grünecker, Kinkeldey, Stockmair & Schwanhäusser Anwaltssozietät

(57) **Abstract**

The invention is related to an apparatus for determining simultaneously wavelength and incidence angle resolved reflectivity and/or ellipsometric properties of a sample (3), comprising: an illumination device (5) comprising a Fourier lens (17) for illuminating a surface portion (7) of the sample (3) with a multi wavelength light beam under a plurality of incidence angles (α), a first optical system comprising the Fourier lens (17) configured to transform an angular light distribution of the multi wavelength light beam reflected from the surface portion of the sample (3) into a positional light distribution in the Fourier plane (15) of the Fourier lens (17), a second optical system comprising an imaging lens (13, 27) for imaging the positional light distribution onto an entrance slit (23) of an imaging spectrograph (25), wherein the imaging spectrograph (25) is configured to disperse the positional light distribution as a function of wavelength essentially perpendicular to its entrance slit (23), and a detector (29), positioned at the exit of the imaging spectrograph (25), with a predetermined amount of pixels arranged in a two dimensional matrix form wherein each pixel of the detector (29) produces an electric signal proportional to the reflectance of the surface portion (7) of the sample (3) for a given incidence angle and a given wavelength. The invention furthermore relates to a corresponding method.

## Description

The invention relates to an apparatus for determining reflectivity and/or ellipsometric properties of a sample.

Reflectivity as well as ellipsometric properties are extensively used to characterize optical coatings or complex multilayer structures, like for example used in microelectronic and/or optical coatings applications. To determine those characteristics, like film thickness, refractive indices, etc., experimentally obtained values of the reflectivity coefficients or the ellipsometry parameters ψ and Δ are compared to theoretical models from which the physical parameters one is interested in are extracted. In order to enhance the quality of the results obtained by this method it is necessary to use extensive experimental data. At the same time the necessary amount of experimental data needs to be obtained in a relatively short time period to make the method suitable for a production environment.

To do so, state of the art ellipsometers determine simultaneously the Phi and Delta parameters either for a plurality of incidence angles or for a plurality of wavelengths. Even though theoretically proposed, an ellipsometer which is capable of measuring at the same time reflectance for a plurality of angles and a plurality of wavelengths has not yet been achieved. This is mainly due to the fact that in state of the art ellipsometers a converging lens is used to focalize the incoming light on one point of the surface of a sample and a second lens is employed to collimate the reflected light beam which then is detected by a one- or two-dimensional detector wherein the pixel positions are related to the angles of incidence.

The adjustment and calibration of such an apparatus strongly depending on the focalizing and collimating effects of the two independent lenses is difficult and tedious and can only satisfactory be achieved when single wavelength light is used. An additional spectrometer therefore makes it even more difficult so that in practice such an ellipsometer is not practical. In addition, the spot size and position in such a system cannot be easily controlled.

It is therefore the object of the present invention to overcome the abovementioned problems and to provide an apparatus for determining simultaneously wavelength and incidence angle resolved reflectivity and/or ellipsometric properties of a sample which can be easily adjusted and calibrated so that it can be advantageously employed in a production environment.

This object is achieved with an apparatus and a method for determining simultaneously wavelength and incidence angle resolved reflectivity and/or ellipsometric properties of a sample according to claims 1 and 9.

Using the Fourier transform properties of a lens is a very elegant way to transform an angular light distribution into a positional light distribution. In this application the illumination is made at a plurality of angles using the Fourier lens. For angular analysis of emissive displays, the applicant has already used this kind of optical arrangement, details of which can be found in FR2613830. In addition the reflected angular light distribution of the multi wavelength light beam is transformed into a positional light distribution by the same Fourier lens. This positional light distribution at the Fourier plane is already angle resolved and in order to obtain the spectral information out of the reflected beam this distribution is imaged using the second optical system onto the entrance slit. As a spectrograph any wavelength dispersing spectrograph can be used, under the condition that the light gets dispersed essentially perpendicular to the large dimension of the entrance slit. This ensures that on the detector placed at the exit of the spectrograph the axis along the extension of the entrance slit corresponds to changing incidence angle and the axis perpendicular corresponds to reflectance changing with wavelength. Suitable as a detector here is any two-dimensional detector having a certain resolution, such as for example a CCD sensor. The number of pixels will determine both the wavelength and the incidence angle resolution due to the size of the pixels.

Using Fourier optics, and in particular the same Fourier lens for illumination purposes as well as the transformation of the angular resolved distribution into the positional distribution, the apparatus is less sensitive with respect to sample and optics alignment and is furthermore relatively independent of spot size variations on the sample, which are limiting factors of state of the art ellipsometers.

The applicant has already used this kind of optical illumination for the characterization of reflective displays, like disclosed in US5880845). Advantageously, the illumination device can further comprise a slit arranged and configured such that the multi wavelength light beam is illuminating the sample under a plurality of angles essentially in a plane defined by the optical axis of the apparatus and the entrance slit of the imaging spectrograph. This means that off specular reflections can be reduced such that the result of the measurement obtained by the detector is better protected against spurious intensities. This is in particular of advantage when samples with a relative high surface roughness, like e.g. gratings, are investigated, as then off specular contributions occur.

According to a preferred embodiment, the illumination device can be configured to illuminate a sample under incident angles being at least within a range of about 0 - 45°, more preferably 0 - 80° with respect to the normal sample surface. Thanks to the Fourier optic it thus becomes possible to resolve the reflectivity and/or ellipsometric properties within a large incidence angle range compared to prior art reflectometers, thus allowing the collection of a large amount of experimental data at a same time.

Preferably, the apparatus can further comprise an adjustable diaphragm positioned between the Fourier lens and the entrance slit to define the size of the surface portion to be analyzed. Again due to the advantages of Fourier optics, not only one spot on the surface can be analyzed. Actually as the Fourier optics image all light rays reflected under the same angle onto one point in the Fourier plane, which will be imaged onto one pixel of the detector, the surface portion to be analyzed can therefore be freely adjusted, so that very small (smaller than 50µm) up to very large portions (as large as 2mm) can be analyzed by simply changing the size of the diaphragm. This adjustment is independent of the angular aperture of the instrument defined by the first Fourier optics. Large measurement spot size can be realized even for very big angular apertures and so the signal over noise ratio is improved compared to other optical configurations.

According to a variant, the apparatus can further comprise a first polarizer positioned in front of the entrance slit of the imaging spectrograph to linearly polarize the reflected multi wavelength light beam, in particular in a plane defined by the incident and the reflected light (p-plane) or in the plane perpendicular to the p-plane (s-plane). The introduction of a first polarizer before the entrance of the imaging spectrograph allows to filter out one polarization direction in the reflected light beam and thereby the polarized reflection coefficient R_{P} or R_{S} can be obtained, also incident angle and wavelength resolved.

Advantageously, the illumination device can further comprise a second polarizer to linearly polarize the multi wavelength light beam, in particular in the p-plane or in the s-plane. The introduction of the second polarizer, in particular positioned behind the illumination slit with respect to the light propagation, can be used to control the polarization state of the light beam prior to reflecting on the sample surface. In this case the first polarizer before the entrance slit of the spectrograph is used to analyze the variation of polarization of the light beam after reflection on the sample surface. This will allow the measurement of the complex ratio R_{P}/R_{S} and/or of the standard ellipsometric parameters ψ and Δ becomes possible. Together with the simultaneous measurement of a plurality of incidence angles and wavelengths a very powerful apparatus to analyze complex multilayer structures is thus obtained.

Advantageously, the first and/or second polarizer is rotatably arranged thereby allowing to change the polarization plane, particularly from the p-plane to the s-plane and vice versa. Such a rotation of the polarizer can be used to get further experimental data to obtain more precise information on the physical properties of the sample.

According to a further preferred embodiment, the apparatus can further comprise a third optical system positioned between the adjustable diaphragm and the entrance slit of the imaging spectrograph being configured such that the surface portion to be analyzed is observable. Using the image of the surface portion of the sample which is going to analyzed allows to well position the sample with respect to the optical elements and furthermore also allows to find a suitable spot on the surface.

Advantages embodiments of the invention are illustrated in the Figures and will be explained in the following. It is shown in:
Figs. 1 a and 1b a first embodiment of the inventive apparatus wherein the illumination system shares optical elements with the first optical system and the second optical system, and
Fig. 2 a second embodiment of the apparatus comprising a third optical system to image a surface portion of the sample to be analyzed.

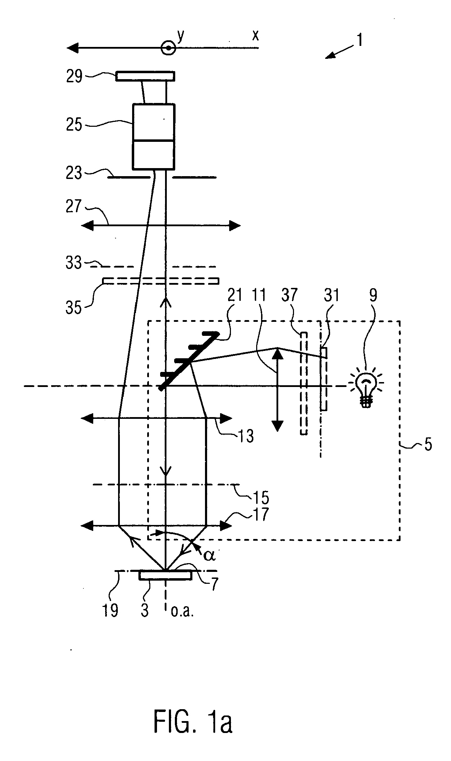

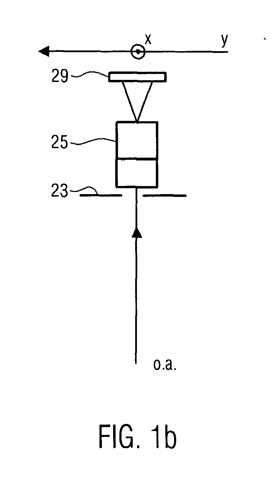

Figs. 1 a and 1b illustrate an apparatus 1 for determining simultaneously wavelength and incidence angle resolved reflectivity and/or ellipsometric properties of a sample 3 according to a first embodiment of the invention. Elements of apparatus 1 illustrated in dashed lines are optional and their addition to the apparatus 1 lead to further variants of the first embodiment.

Parts of the apparatus 1 related to the Fourier optics are similar to the design of an apparatus for measuring photometric and colorimetric characteristics of an object disclosed in US5,880,845 applied to the characterization of reflective displays of the same applicant.

The apparatus 1 has an illumination device 5 used to illuminate a surface portion 7 of the sample 3. This illumination device 5 comprises a light source 9 preferably emitting light with a plurality of wavelengths, in particular white light, such as for example a xenon or tungsten halogen lamp emitting light within a wavelength range of about 200nm to 1000nm.

The light source 9 is imaged using a first and a second lens 11, 13 onto the focal plane 15 of a third lens 17. As a consequence the multi wavelength light beam hits the surface of the sample 3, positioned in the conjugate focal plane 19 of the third lens 17, under a plurality of incident angles α. The proposed optical arrangement furthermore allows to illuminate not only a spot but a certain surface portion 7 of the sample 3. With the proposed optical arrangement incidence angles in a range of up to 80° with respect to the normal of the surface of the sample 3 are obtained.

To optimize the amount of optical elements and the dimensions of the apparatus the illumination device 5 further comprises a mirror or a beamsplitter 21 so that the light source 9 can be shifted away from the optical axis o.a. of the apparatus 1.

In this embodiment the illumination device 5 comprises three lenses 11, 13 and 17 as well as a mirror 21. However, as is evident for a person skilled in the art, this arrangement corresponds only to one possible arrangement and illumination devices 5 with less than three or more than three lenses and with or without mirror can be realized, as long as the requirement that the sample 3 is illuminated with multi wavelength light under a plurality of incident angles is satisfied.

The proposed design of the illumination device 5 has furthermore the advantage that at least a part of the lenses, here the second and third lens 13, 17 can be shared with the optical systems placed in the reflected beam and which will be described in the following.

Actually, the third lens 17 corresponds to the Fourier lens which is configured to transform the angular light distribution of the reflected light beam into a positional light distribution in the Fourier plane, which is the focal plane 15 of the third lens 17. In this embodiment thus the first optical system according to the invention is composed of only one lens.

The positional light distribution obtained in the focal plane 15 of the third lens 17 is then imaged onto an entrance slit 23 of a spectrograph 25 using a second optical system comprising two lenses, namely the second lens 13, shared with the illumination device 5, and a fourth lens 27. Again the number of lenses in the second optical system may be varied as long as the positional light distribution in the focal plane 15 is imaged onto the entrance slit 23 of the spectrograph 25.

The entrance slit 23 has its large dimension in the X direction and a relatively small extension in the Y direction, perpendicular to the plane of Fig. 1 a. Thus essentially light propagating in the plane defined by the optical axis o.a. of the apparatus 1 and the X direction, enters the spectrograph 25 which is configured to disperse light depending on the wavelength in the y direction. The spectrograph 25 can be any suitable imaging spectrograph under the condition that it disperses light in the Y direction as a function of wavelength.

At the exit of the spectrograph 25 a detector 27 is placed, which comprises a predetermined amount of pixels arranged in a two-dimensional matrix, like for example a CCD detector. Along one direction, here the X direction, the CCD detector will detect the angular dependence of the reflectivity and along the other direction, here the Y direction, the CCD detector will detect the wavelength dependence of the reflectivity. The overall resolution thereby depends on the amount of pixels per unit area of the detector 27.

Fig. 1 b shows a cut of the spectrograph portion of the apparatus 1 in the plane defined by the optical axis o.a. of the apparatus 1 and the Y direction. In this plane the dimension of the slit 23 is small so that only light traveling in the plane defined by the optical axis o.a. and the X direction enters the spectrograph 25 which in turn disperses light of different wavelengths in the Y direction so that the detector 29 then detects wavelength resolved reflectivity along its Y direction.

In the following, further variants of the first embodiment illustrated in Figs. 1 a and 1 b will be explained.

The illumination device 5 can comprise a slit 31 which, like the entrance slit 23 of the spectrograph 25, has its small dimension in the Y direction, so that the light beam is already prior to reflecting on the sample 3 essentially confined to the plane defined by the optical axis o.a. and the X direction. This will reduce the presence of off-specular reflected intensities in the detected intensities which ameliorates the quality of the measured data.

Furthermore an adjustable diaphragm 33 can be positioned in the reflected beam allowing to control the size of the surface portion 7 of sample 3 to be analyzed.

In addition a first polarizer 35 may be placed in the reflected beam to linearly polarize the reflected beam. Preferable this first polarizer 35 is rotatably arranged so that the polarization direction of the reflected beam can be changed.

Moreover a second polarizer 37 may be positioned in the illumination device 5 to already linearly polarize the light prior to the reflecting from the surface of the sample 3.

Eventually, in the case of anisotropic samples 3, the sample 3 could be mounted on a rotatable stage having its rotation axis essentially parallel to the optical axis o.a., such that reflectivity and/or ellipsometric properties can be measured for various azimuthal alignments of the sample. For isotropic samples 3 a measurement for one azimuthal position is, however, usually sufficient.

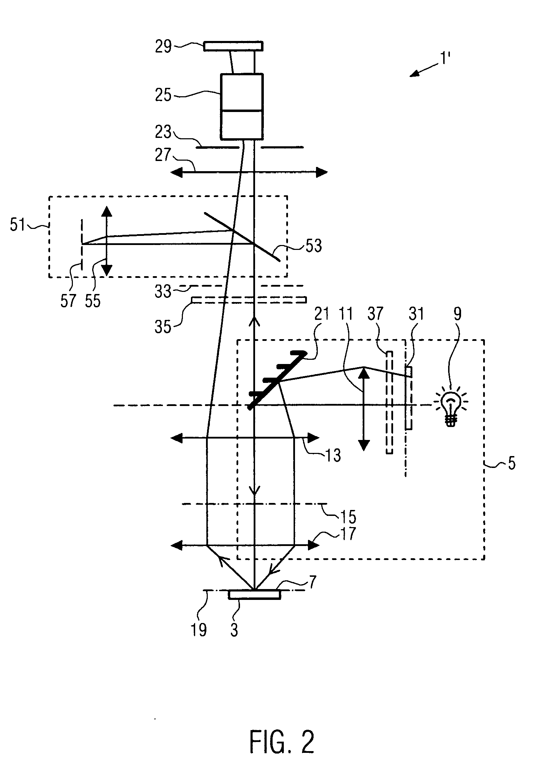

Fig. 2 illustrates a second embodiment of the apparatus for determining simultaneously wavelength and incidence angle resolved reflectivity and/or elipsometric properties of a sample 3. Elements of the second embodiment with the same reference numerals like the ones of embodiment one illustrated in Fig. 1 correspond to those and are not explained in detail again, however their description is enclosed herewith by reference.

In addition to the first embodiment, the second embodiment furthermore comprises a third optical system 51 positioned between the adjustable diaphragm 33 and the entrance slit 23 of the spectrograph 25. This third optical system 51 is used to image the illuminated spot on the surface of the sample 3 and can thus be used to find the correct spot, which one wishes to analyze, as well as to see whether the sample 3 is well aligned with respect to the focal plane 19. In this embodiment the third optical system 51 comprises a mirror 53, reflecting a portion of the reflected light beam away from the optical axis o.a. towards a fifth lens 55 used to image the illuminated spot on sample 3 onto a viewing means 57 which can for example be a screen, the detector 29 or directly the eye of an operator.

To carry out reflectivity and/or ellipsometry measurements of samples, in particular thin films or multilayer structures, the apparatus 1 or 1' is used in the following way.

The sample 3 is aligned in the focal plane 19 of the third lens 17. Then sample 3 is illuminated with a multi wavelength light beam under a plurality of angles and the third lens 17 creates the Fourier transform of the reflected beam in its focal plane 15. Thereby the angle resolved information is transformed into a positional resolved information. The reflected light carrying the reflectivity and/or ellipsometric information then enters the spectrograph 25 via the slit 23. There for each incidence angle, now corresponding to a certain position in x direction, the wavelength dependency is resolved such that the pixels of detector 29 detect angular and wavelength resolved intensities. Those intensities are calibrated using a reference sample in order to obtain the reflection coefficients and can then be analyzed by a computer using a theoretical model to find the thin film parameter the user is interested in. Those comprise for example film thicknesses, refractive indices, interface roughness etc.. If the user is in addition interested in polarization resolved reflectance values (e.g. R_{P} and R_{S}) the first polarizer 35 is introduced in the reflected beam and by simply rotating it by 90° the two reflectance values R_{P} and R_{S} can be obtained. To obtain the ellipsometric parameters ψ and Δ the second polarizer 37 is introduced in the illumination device 5 to polarize the light prior to reflecting from the sample 3 and different intensity measurements are performed for fixed polarizer 35 position and variable polarizer 37 positions. Usually only four positions are necessary to get the ellipsometric parameters.

Using the adjustable diaphragm 33 the spot size on the sample 3 of the portion to be analyzed can easily be adjusted and furthermore using the third optical system 51 the alignment of the sample 3 with respect to the focal plane 19 can be easily achieved and the position of the measurement spot on the sample surface 7 can be selected.

Thus the present invention provides an apparatus which delivers simultaneously an extensive amount of experimental data to characterize thin films or multilayer structures and which at the same time is suitable for a high volume production process.

## Claims

1. Apparatus for determining simultaneously wavelength and incidence angle resolved reflectivity and/or ellipsometric properties of a sample (3), comprising:
- an illumination device (5) comprising a Fourier lens (17) for illuminating a surface portion (7) of the sample (3) with a multi wavelength light beam under a plurality of incidence angles (α),
- a first optical system comprising the Fourier lens (17) configured to transform an angular light distribution of the multi wavelength light beam reflected from the surface portion of the sample (3) into a positional light distribution in the Fourier plane (15) of the Fourier lens (17),
- a second optical system comprising an imaging lens (13, 27) for imaging the positional light distribution onto an entrance slit (23) of an imaging spectrograph (25),
- wherein the imaging spectrograph (25) is configured to disperse the positional light distribution as a function of wavelength essentially perpendicular to its entrance slit (23), and
- a detector (29), positioned at the exit of the imaging spectrograph (25), with a predetermined amount of pixels arranged in a two dimensional matrix form wherein each pixel of the detector (29) produces an electric signal proportional to the reflectance of the surface portion (7) of the sample (3) for a given incidence angle and a given wavelength.

2. Apparatus according to claim 1, wherein the illumination device (5) further comprises a slit (31) arranged and configured such that the multi wavelength light beam is illuminating the sample (3) under a plurality of angles essentially in a plane defined by the optical axis (o.a.) of the apparatus and the entrance slit (23) of the imaging spectrograph (25).

3. Apparatus according to one claim 1 or 2, wherein the illumination device (5) is configured to illuminate the sample (3) under incident angles being at least within a range of about 0 - 45°, more preferably 0 - 80° with respect to the normal of the sample surface (3).

4. Apparatus according to one of claims 1 to 3, further comprising an adjustable diaphragm (33) positioned between the Fourier lens (17) and the entrance slit (23) to define the size of the surface portion (7) of the sample (3) to be analyzed.

5. Apparatus according to one of claims 1 to 4, further comprising a first polarizer (35) positioned in front of the entrance slit (23) of the imaging spectrograph (25) to linearly polarize the reflected multi wavelength light beam, in particular in a plane defined by the incident and the reflected light (p-plane) or in the plane perpendicular to the p-plane (s-plane).

6. Apparatus according to one of claims 1 to 5, wherein the illumination device (5) further comprises a second polarizer (37) to linearly polarize the multi wavelength light beam, in particular in the p-plane or in the s-plane.

7. Apparatus according to claim 5 or 6, wherein the first and/or second polarizer (35, 37) is rotatably arranged, thereby allowing to change the polarization plane, in particular from the p-plane to the s-plane and vice versa.

8. Apparatus according to one of claims 1 to 7 further comprising a third optical system (51) positioned between the adjustable diaphragm (33) and the entrance slit (23) of the imaging spectrograph (25) and configured such that the surface portion (7) of the sample (3) to be analyzed is observable.

9. Method for determining simultaneously wavelength and incidence angle resolved reflectivity and/or elipsometric properties of a sample (3), comprising the steps of:
- illuminating a surface portion (7) of the sample (3) with multi wavelength light under a plurality of incidence angles using a Fourier lens (17),
- transforming an angular light distribution of the multi wavelength light reflected from the surface portion (7) of the sample (3) into a positional light distribution in the Fourier plane (15) of the Fourier lens (17),
- imaging the positional light distribution onto an entrance slit (23) of an imaging spectrograph (25),
- dispersing the positional light distribution as a function of wavelength essentially perpendicular to the entrance slit (23), and
- detecting the angular and wavelength resolved light intensity distribution using a detector (29), positioned at the exit of the imaging spectrograph (25), with a predetermined amount of pixels arranged in a two dimensional matrix form wherein each pixel of the detector produces an electric signal proportional to the reflectance of the surface portion of the sample for a given incidence angle and a given wavelength.
